(19) Europäisches Patentamt
European Patent Office
Office européen des brevets

(11) **EP 3 620 935 A1**

(12) **EUROPEAN PATENT APPLICATION**

(43) Date of publication:
**11.03.2020 Bulletin 2020/11**

(51) Int Cl.:
*G06F 16/34* *(2019.01)*    *G06F 17/27* *(2006.01)*

(21) Application number: **18192464.8**

(22) Date of filing: **04.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft 80333 München (DE)**

(72) Inventors:
• **Kumar Karn, Sanjeev**
 **81379 München (DE)**
• **Krompaß, Denis**
 **81549 München (DE)**
• **Waltinger, Ulli**
 **86633 Neuburg (DE)**

(54) **SYSTEM AND METHOD FOR NATURAL LANGUAGE PROCESSING**

(57) The present invention generally relates to natural language processing system configured for receiving an input sequence of input tokens representing a first sequence of words in a natural language of a first text and generating an output sequence of output tokens representing a second sequence of words in a natural language of a second text. The natural language processing system has at least one sequence-to-sequence (seq2seq) model and a policy gradient generator. The seq2seq model comprises an encoder, an attention module and a decoder. The encoder comprises a forward recurrent neural network RNN and a backward RNN configured for encoding each input token in the input sequence into a respective encoded representation of each input token. The attention module is configured for applying weights to the encoded representations. The decoder comprises a forward RNN and a backward RNN configured for decoding the weighted encoded representations into the output tokens of the output sequence. The policy gradient generator is configured for training the weights for adaption to one corpus for each seq2seq model.

## FIG 3

**Description**

The present invention generally relates to a natural language processing system configured to receive an input sequence of input tokens representing a first sequence of words in a natural language of a first text and to generate an output sequence of output tokens representing a second sequence of words in a natural language of a second text.

It is known that news exhibit multiple forms of diffusion that can vary from a traditional model of advertising through a headline in a newspaper to viva voce of content by ordinary users. As recently more people started getting the news in some digital format, news publishers relayed their focus on sources that lead readers to their news portals. One common way to reach such websites is social media. As linguistic styles highly impact the decision of readers on clicking and on the other hand social media put no restriction on styles, the headlines are no longer the only form of disseminating the news.

Several linguistic patterns can invoke curiosity and/or attention and/or emotional reactions, e.g., provocative question, comparing extremes, sentence fragments, short punchy statement, direct appeal, specific words and important quotes. Furthermore, in a digital environment customers and consumers have limited time and are often already well informed. To gain the interest of customers and consumers is therefore more and more a task for advertisement and marketing purposes.

The term "ShortText" describes any text about 15 words or less, in particular a text that is pointing to a news article with the purpose to invite the recipient to read the article. A headline is a ShortText that optimize the relevance of a story to its readers by including interesting and high new value content from the article. "Clickbait" is a term typically used for a website link designed to entice users to go to a certain web-page or video. Therefore, Clickbait can be a ShortText that makes a user click an embedded link; often the user eventually regrets the click as the linked article does not match the impression created by the Clickbait.

Furthermore, also a teaser can be introduced and defined as a ShortText devised by fusing curiosity-arousing and attention-gaining elements with interesting facts from the article in a manner that they create a valid impression of an upcoming story and at the same time a sense of incompleteness. A teaser is one of the main vehicles for transmitting news on social media and is also used in the field of marketing and purchasing services/articles. Linguistically, there are many writing patterns whose incorporation in a ShortText leads to curiosity arousal and emotional interest to a reader.

In the field of natural language processing, abstractive neural summarization models are end-to-end trainable sequence to sequence (seq2seq) models that encode a source text (e.g., news article) to a dense vector and then decode a target text (ShortText) using that vector.

The following scientific publications illustrate some of the technical background in this field:

- Ramesh Nallapati, Bowen Zhou, Cicero Nogueira dos Santos, Caglar Gülcehre, and Bing Xiang. 2016. Abstractive text summarization using sequence-to-sequence runs and beyond. In Proceedings of the 20th SIGNLL Conference on Computational Natural Language Learning, CoNLL 2016, Berlin, Germany, August 11-12, 2016, pages 280-290. ACL
- Sumit Chopra, Michael Auli, and Alexander M. Rush. 2016. Abstractive sentence summarization with attentive recurrent neural networks. In NAACL HLT 2016, The 2016 Conference of the North American Chapter of the Association for Computational Linguistics: Human Language Technologies, San Diego, California, USA, June 12-17, 2016, pages 93-98. The Association for Computational Linguistics.
- Sumit Chopra, Michael Auli, and Alexander M. Rush. 2016. Abstractive sentence summarization with attentive recurrent neural networks. In NAACL HLT 2016, The 2016 Conference of the North American Chapter of the Association for Computational Linguistics: Human Language Technologies, San Diego California, USA, June 12-17, 2016, pages 93-98. The Association for Computational Linguistics.

Sequence to sequence problems address areas such as machine translation, where an input sequence in one language is converted into an output sequence in another language. The basis for sequence modelling tasks, such as machine translation, is language modelling. At a high level, a language model takes in a sequence of inputs, looks at each element of the sequence and tries to predict the next element of the sequence.

A standard training method for such language models is Maximum Likelihood Estimation (MLE) in a teacher forcing manner, where ground-truth words are fed back into the model to be conditioned on for generating the subsequent word of a sentence. This means, language models are generative: once trained they can be used to generate sequences of information by feeding their previous outputs back into the model. However, one major disadvantage of an MLE trained sequence to sequence model is that they require a large number of sequence pairs for a satisfactory result. Also, usually the generated texts from these models consist only of frequently used words and are therefore often deemed boring as well as ranking lowly in qualitative measures.

Therefore, generating a type of teaser using a seq2seq model aces two challenges: (1) gathering large amounts of data and (2) materializing uncommon vocabularies. Gathering large amounts of one type of teasers is challenging as one their distinguishing characteristic is bona-fidelity which restricts their retrieval to a handful of authorized news organization on social media, thereby limiting their numbers as these organizations have a single digit authoring of news articles per day and similarly a single digit dissemination of teasers per article.

Transfer learning has recently addressed the scarcity of data problems for several computer vision tasks as well as for NLP (Natural Language Processing) tasks, e.g., sequence classification. However, transferring and fine-tuning a seq2seq model is challenging as such a pre-trained model involves teacher forcing which can make the model inflexible and indifferent to small supervision data such as a teaser. Teacher forcing is a strategy for training recurrent neural networks that uses model output from a prior time step as an input. Teacher forcing is a procedure in which during training the model receives the ground truth output y(t) as input at time t + 1.

Rennie et al. (Steven J Rennie, Etienne Marcheret et al., Self-critical sequence training for image captioning. CVPR, 2017) addressed the issue of a teacher forcing through a learning policy that maximizes a specific discrete metric instead of minimizing the MLE loss and utilized self-critical policy gradient training for it. A self-critical policy gradient uses the difference in the rewards assigned to the text sampled by the decoder to one obtained by a greedy search. Paulus et al. (Romain Paulus, Caiming Xiong, and Richard Socher.2018. A deep reinforced model for abstractive summarization. In International Conference on Learning Representations) mixed self-critical policy gradient loss with MLE loss and obtained an increase in both the discrete metrics and readability of the generated text.

There are very limited works on using newswire and generating microblogs, e.g. article tweet generation. Lloret and Palomar (Elena Lloret and Manuel Palomar. 2013. Towards automatic tweet generation: A comparative study from the text summarization perspective in the journalism genre. Expert Syst. Appl., 40(16):6624-6630.) observed indicative tweets as interesting short-text and tried to generate them by simple executing off-the-shelf extractive models. However, evaluation shows that the generated text attains a high quantitative score but it was not interesting enough regarding ground-truths.

This suggests that the extraction is not the only strategy for the generation of teasers. Similarly, the analysis of indicative tweets by Sidhaye and Cheung (Priya Sidhaye and Jackie Chi Kit Cheung. 2015. Indicative tweet generation: An extractive summarization problem? In Proceedings of the 2015 Conference on Empirical Methods in Natural Language Processing, pages 138-147, Lisbon, Portugal. Association for Computational Linguistics) demonstrated the narrow overlaps between such tweets. Although extractive methodologies were realized to be unsuccessful in generating such interesting tweets, obtaining a high and consistent quality and also an enormous amount of such interesting tweets is challenging.

Such indicative tweets can be termed also as teaser tweets. However, a teaser corpus obtained by using this known algorithm includes several different types of teasers corresponding to different linguistic patterns which generate curiosity and emotional interest. Especially modelling them by using a single model loses control over the styles. Intuitively, a human author of a teaser would apply known curiosity-arousing patterns and patterns generating emotional interest and disseminate them over social media.

Recently, there has been a significant growth in the data-driven neural networks for natural language processing (NLP). The success of sequence to sequence (seq2seq) based architecture in machine translation, question answering and many more has popularized its application in text mapping paradigms. The introduction of attention to seq2seq models was a further development.

Attention is an important aspect in the real world as humans are bombarded every day with sensory inputs. The human brain is able to reduce the overwhelming amount of signals into useful information, which can then be used to make decisions. Recent research has shown that the same processes that allow humans to focus on important information while filtering out unnecessary data can be applied to neural networks. This technique, commonly referred to as "attention" helps to build neural networks that can effectively tackle challenging sequence processing tasks, such as language translation, where simple sequence to sequence models fail.

With such an attention mechanism all encoded states from the encoder input sequence are weighted by an attention factor. The success of these models is largely due to the size of labelled data and the type of ShortText they were applied to. As discussed, it is possible to generate such a ShortText using above described methods as their corpus size is sufficient for training these methods; however, such methods lose control over the style. However, dividing the teaser corpus based on the style lead to smaller corpora which are not sufficient to train the above methods.

It is therefore an object of the present invention to improve natural language processing using neural networks for the generation of a target text of an original text. Especially a target text can be a teaser of a news article or a summary.

According to a first aspect, the invention provides a natural language processing system configured for receiving an input sequence of input tokens representing a first sequence of words in a natural language of a first text and generating an output sequence of output tokens representing a second sequence of words in a natural language of a second text. The natural language processing system has at least one sequence-to-sequence (seq2seq) model and a policy gradient generator. The seq2seq model comprises an encoder, an attention module and a decoder. The encoder comprises a forward recurrent neural network RNN and a backward RNN configured for encoding each input token in the input sequence into a respective encoded representation of each input token. The attention module is configured for applying weights to the encoded representations. The decoder comprises a forward RNN and a backward RNN configured for decoding the weighted encoded representations into the output tokens of the output sequence. The policy gradient generator is configured for training the weights for adaption to one corpus for each seq2seq model.

With such a system the second text generated by language processing using computer science reflects more precisely the content of the first text which is important for the understanding of human readers of the second text. The generation of target text by computer science often do not match the intention of the original text so that by using the new concept of adaption according to the present invention an improvement regarding text understanding of newly generated text by automatic language processing can be achieved. On the one hand a separate seq2seq model for each style, pattern or corpus, respectively, of the second text is provided, which separate seq2seq models each have weights specifically adapted for one corpus. On the other hand the weights are separately trained for each seq2seq model with specific training data for the respective corpus. A corpus is a collection of written text with a certain linguistic style. The weights form an attention context vector.

In a further embodiment, the policy gradient generator is a self-critical policy generator.

In some preferred embodiments, the policy gradient generator is configured for training the weights by means of a REINFORCE algorithm.

In other advantageous embodiments, the policy gradient generator is given by the equation:

$$\nabla_\theta E[R] = E_{\hat{x}_t \sim G} \left[ \sum_{t=1}^{T} (R_t - b_t) \ \nabla_\theta \log( G_\theta(\hat{x}_t)) \right]$$

where x represents the output token, R represents a cumulative reward and b represents a baseline, respectively for a state S of a sequence of length T.

Preferably, a recall-oriented-understudy-for-gisting-evaluation- (ROUGE-) recall is used as a reward in training the weights by the policy gradient generator.

In some advantageous embodiments, the second text may be a ShortText comprising one of several linguistic styles and the policy gradient generator is configured for adaption to the one of the several linguistic styles based on the corpus for the respective seq2seq model.

Preferably, the second text may be a teaser comprising one of several linguistic styles and the policy gradient generator is configured for adaption to the one of the several linguistic styles based on the corpus for the respective seq2seq model.

In other advantageous embodiments, the teaser may be a fragment-based teaser or a quote-based teaser.

In further embodiments, the policy gradient generator is configured for utilising an algorithm for generating the corpus of a dataset comprising examples of a linguistic style of the second text and using the respective corpus having the recognised linguistic style for training the weights.

The encoder is configured to process the first text according to the recognized style of the first text.

According to a second aspect, the invention provides a computer-implemented method for processing natural language, by receiving an input sequence of input tokens representing a first sequence of words in a natural language of a first text and generating an output sequence of output tokens representing a second sequence of words of a second text. The method comprises the steps:

- Encoding each input token in the input sequence into a respective encoded representation of each input token by an encoder of at least one sequence-to-sequence (seq2seq) model comprising a forward recurrent neural network (RNN) and a backward RNN.
- Applying weights to the encoded representations by an attention module of the at least one seq2seq model.
- Decoding the weighted encoded representations into the output tokens of the output sequence by a decoder of the at least one seq2seq model comprising a forward RNN and a backward RNN.
- Training the weights for adaption to one corpus for each seq2seq model by a policy gradient generator.

Preferably, training the weights is implemented by means of a REINFORCE algorithm.

In some advantageous embodiments, the method uses a recall-oriented understudy-for-gisting-evaluation- (ROUGE-) recall as a reward in training the weights.

In other advantageous embodiments, the method utilises an algorithm for generating the corpus of a dataset comprising examples of a linguistic style of the second text and using the respective corpus having the recognised linguistic style for training the weights by the policy gradient generator.

According to a third aspect, the invention provides a non-transitory computer-readable data storage medium comprising executable program code configured to, when executed, perform the method according to the second aspect.

According to a fourth aspect, the invention provides a computer program product comprising executable program code configured to, when executed, perform the method according to the second aspect.

According to a fifth aspect, the invention provides a data stream comprising, or configured to generate, executable program code configured to, when executed, perform the method according to the second aspect.

Additional features, aspects and advantages of the invention or of its embodiments will become apparent on reading the detailed description in conjunction with the following figures:

Fig. 1    provides a general overview of a natural language processing system having a sequence to sequence model for the generation of target text according to an embodiment of the first aspect of the invention;

Fig. 2    provides a schematic flow diagram illustrating the generation of a teaser corpora according to an embodiment of the present invention;

Fig. 3    provides a general overview of the natural language processing system having a policy gradient generator according to the embodiment in Fig. 1 of the first aspect of the invention;

Fig. 4    provides a schematic flow diagram illustrating an embodiment of a method according to the present invention;

Fig. 5    schematically illustrates a non-transitory computer-readable data storage medium according to an embodiment of the third aspect of the invention;

Fig. 6    provides a schematic flow diagram illustrating a computer-implemented method for processing natural language according to an embodiment of the second aspect of the invention.

In the following description, for purposes of explanation and not limitation, specific details are set forth in order to provide a thorough understanding of the present invention. It will be apparent to one skilled in the art that the present invention may be practiced in other implementations that depart from these specific details.

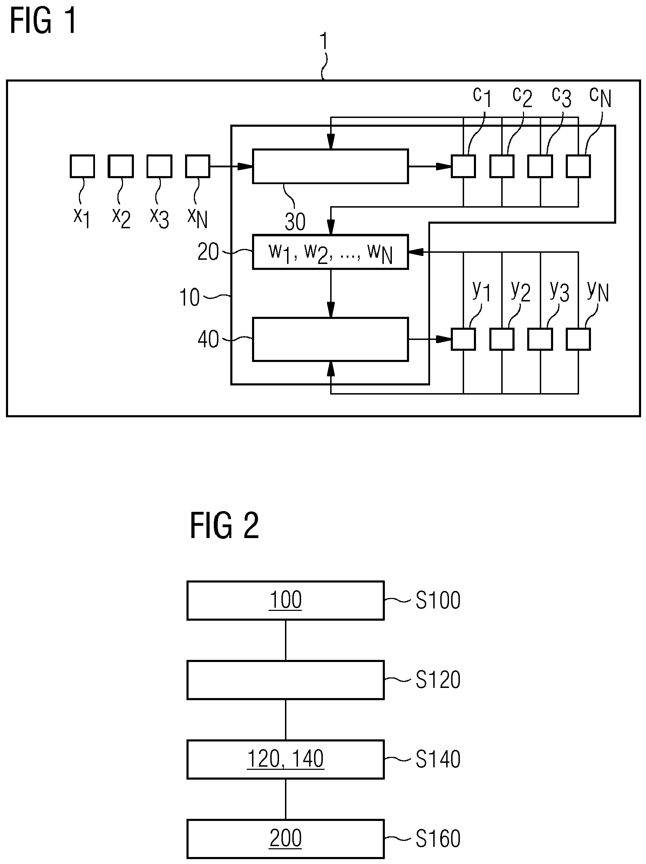

Fig. 1 provides a general overview of a natural language processing system 1 having at least one sequence to sequence (seq2seq) model 10 with an attention module 20 for generating a target text Y token-wise. The model 10 includes an encoder 30 that reads an article X token-wise (x1, x2, ... xN) and a decoder 40 that generates the target text Y token-wise (y1, y2, ..., yN). The encoder 30 in the proposed model contains forward and backward recurrent neural networks (RNN) that run on the tokens (x1, x2, ... xN) of the text (article) X, and thereby generate an encoded representation C (c1, c2, c3, ... cN) for it. A last state S is output by the backward RNN of the encoder 30 as the encoded representation (c1, c2, ... cN) that is input to the forward RNN of the decoder 40 (after the weights (w1, w2,... wN) have been applied (see below)).

This context representation C is a matrix of size n x 2p or (1, ..., N) x (1, ..., 2P), where n denotes the number of token $c_i$ of the encoded representation C and P denotes the vector dimension of the RNN. The last state S of the encoded representation (c1, c2, ... cN) generated by the backward RNN of the encoder 30 is fed to the attention module 20 and weighted by several attention weights w1, w2, ... wN which can be changed over several backward cycle states. Initial attention weights $w1_0$, $w2_0$, ... $wN_0$ are set to zero. The attention weights are used to predict the distribution over target vocabulary for a current token prediction $y_i$. The weights w1, w2, ... wN form an attention context vector.

According to the present invention, the attention weights w1, w2, ... wN of the attention module 20 of the at least one seq2seq module 10 are trained for the adaption to one of different linguistic styles or in particular teaser styles. Several linguistic styles or linguistic patterns can invoke curiosity and/or emotional reactions, e.g., provocative question, comparing extremes, sentence fragments, short punchy statement, direct appeals, specific words and important quotes. However, computationally defining an exhaustive set of rules for many of these patterns is a difficult task because often these patterns involve many marker words and correspondingly many grammar rules. According to an embodiment of the invention easily recognizable patterns, i.e., sentence fragments and quotes are used.

A fragmented sentence is a sentence that is cut short and is known to impact a range of effects, especially grabbing attention as the reader asks questions because he/she needs more information. A sentence fragment is often a lone subordinate clause, participle phrase, infinitive phrase, afterthought, lonely verb phrase, or appositive, and each of these fragments have a marker that identifies it. In the following, such an algorithm for fragment-based teaser recognition AFT according to an embodiment of the invention is illustrated. It utilizes marker words for this type of fragments and compiles a dataset of fragment teasers.

**ALGORITHM 1: Fragment-based Teaser-Recognition**

```
 1: global
 2:    sClauses ← pattern (&List Subordinate CONJUNCTJONS)
 3:    rPronouns ← pattern (&List Relative PRONOUNS)
 4:    rAdverbs ← pattern (&List Relative ADVERBS)
 5:    pPhrases ← pattern (&List Participle PHRASE)
 6:    iPhrases ← pattern (&List Infinite PHRASE)
 7:    afterthoughts ← pattern (&List AFTERTHOUGHTS)
 8:    lonelyVerbs ← pattern (&List Coordinating
       CONJUNCTIONS)
 9: end global
10: procedure [S_FRAGMENT (text)
11:  sentence list ← split (text)
12:  for s in sentence list do
13:      if       Match (sClauses, s)      or
       Match (rPronouns, s)  or  Match (rAdverbs, s)
       Or Match (pPhrases, s)  or  Match (iPhrases, s)  or
       Match (afterthoughts, s)  or
       Match (lonelyVerbs, s)
           then return  TRUE
14:      return FALSE  > There is no sentence fragment.
```

A teaser that includes a short and eye-catching quote set inside quotation marks is designated as a quote-based teaser. News organizations often employ these forms of teasers as often quotes are so important that despite their overshadowing of other facts of the story they manage to provide the gist of the story.

There are two main forms of quotes: extractive and abstractive. Extractive quotes require the model to recognize the substring in the article that arouses curiosity in the reader, e.g., question quote. Abstractive requires the model to generate a quote based on the context and are computationally more involved than extractive as they vary from highly allusive to imprecise ones.

For compiling quote teasers, regular expressions for all forms of quotation mark are configured and matched against the text by using an algorithm for quote-based teaser recognition AQT as illustrated in the following.

**ALGORITHM 2: Quote-based Teaser-Recognition**

```
1: global
2:     qleft ← pattern (Left Single Quotation Mark)
3:     qright ← pattern (Right Single Quotation Mark)
4:     qdoubleleft ← pattern (Left Double Quotation Mark)
5:     qdoubleright ← pattern (Right Double Quotation
       Mark)
6:     qsingle ← pattern (Apostrophe)
7:     q2graveaccent ← pattern (Grave Accent)
9: end global
10: procedure HAS_QUOTE (text)
11:        if length (search (text, qdoubleleft)) > 0
           then
12:        if length (search (text, qdoubleright) > 0
           or
       length (search (text, q2single)) > 0 then
13:        return TRUE > Begins with double quotation
14:        if length (search (text, qleft)) > 0 then
15:        if length (search (text, qright)) > 0 or
16:        return TRUE > Begins with single quotation
17:        if length search (text, q2graveaccent)) > 0
           then
18:        if length (search (text, q2singel)) > 0 or
       length search (search (text, q2singel)) > 0 then
19:        return TRUE  > Begins with grave accent
20:        return FALSE  > There is no quote.
```

In Fig. 2, the generation of a corpus 200 is shown. In step S100 a teaser corpus 100 is obtained by using a teaser recognition algorithm. Then the fragment-based algorithm AFT and/or the quote-based algorithm AQT are applied in step S120 on the teaser corpus 100 and corpora 120, 140 for the respective different linguistic styles of AFT and/or AQT are compiled in step S140. After separating such corpora 120, 140 from the teaser corpus 100, the remaining corpus 200 is utilized in step S160 for pre-training the sequence to sequence model 10. Pre-training means in this case that the representation of the sequence-to-sequence models has been initialized (trained) with a part of a corpus. That is the corpus is split into train, test, and evaluation parts (traditional approach). One part of the corpus has been used to initialize the parameter (pre-train) of the model

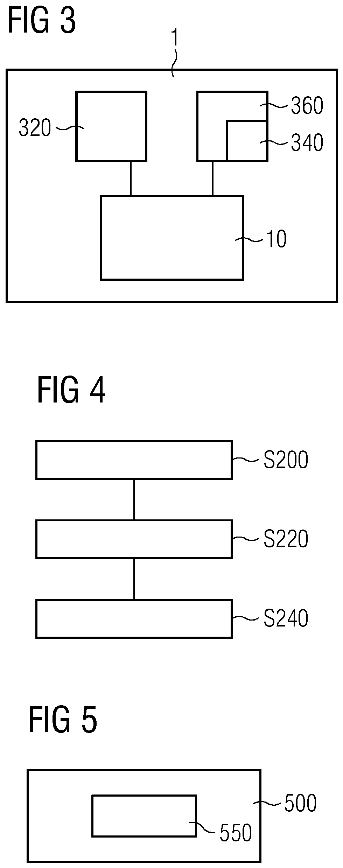

In Fig. 3 the natural language processing system 1 according to the present invention is shown. In a sequence to sequence model 10 the weights (attention vector) w1, w2, ... wN are adapted by a policy gradient generator 320 of the natural language processing system 1 using a self-critical policy gradient via a policy gradient algorithm, e.g., such as REINFORCE (Sutton et al., 2000). The REINFORCE algorithm was part of a family of algorithms first proposed by Ronald Williams in 1992. In his original paper, he was not able to show that this algorithm converges to a local optimum, although he was quite confident it would. The proof of its convergence came along a few years later in Richard Sutton's paper on this topic. In REINFORCE, the decoder or generator G of a sequence to sequence model seeks to maximize the cumulative total reward for the generation. The variance of the REINFORCE gradient generator is reduced through the baseline b.

The natural language processing system 1 may be realised as, or implemented by, a computing device. The computing device may be realised as any device, or any means, for computing, in particular for executing a software, an app, or an algorithm.

For example, the computing device may comprise a central processing unit (CPU) and a memory operatively connected to the CPU. The computing device may also comprise an array of CPUs, an array of graphical processing units (GPUs), at least one application-specific integrated circuit (ASIC) or any combination of the foregoing. Some, or even all, modules of the system may be implemented in a distributed way and/or by a cloud computing platform.

Accordingly, the modules of the system 1 described herein may be realised as software modules run, or implemented, by the computing device.

According to the present invention, ROUGE-recall (Recall-Oriented Understudy for Gisting Evaluation) is used as a reward 340 in a reward module 360 at each time step for a single sequence. ROUGE is a set of metrics and a software package used for evaluating automatic summarization and machine translation software in natural language processing. The metrics compare an automatically produced summary or translation against a reference or a set of references (human-produced) summary or translation. Furthermore, previous state rewards 340 are used as the baseline for the sequence of tokens. Thus, a token generated at a time step $t_1$ will influence the rewards 340 received at that time step $t_1$ and subsequent time steps $t_x$ and a gradient for the policy gradient generator 320 will include contributions for each token in order to maximize the total reward 340, e.g., a sum of advantages.

Output tokens o1, o2,... oN correspond to processing states s1, S2, ..., SN of the recurrent neural network RNN. Per state S1, S2, ..., SN rewards 340 are estimated by the reward module 360.

In order to train the adapted sequence to sequence model10, the (preferably self-critical) policy gradient generator 320 is maximized according to the following equation:

$$\nabla_\theta E[R] = E_{\hat{x}_t \sim G} \left[ \sum_{t=1}^{T} (R_t - b_t) \ \nabla_\theta \log(\ G_\theta(\hat{x}_t)) \right]$$

where x represents the output, R represents the cumulative reward and b represents the baseline, respectively for a state S of a sequence of length T.

According to this equation, a generator G will be penalized for greedily selecting a token that achieves better reward at that time alone and ignoring the rest.

For the verification of the adapted sequence to sequence model 10 according to the invention, precision, recall, and f-score of the generated target text compared to a ground-truth text were measured. The ground truth is part of a manually annotated data set that is used as a reference/comparison.

Precision means the fraction of relevant text elements of the generated target text in comparison to the ground-truth text, while recall (also known as sensitivity) is the fraction of relevant text elements of the generated text that have been retrieved over the total amount of the generated text. Both precision and recall are measurements for the relevance of the generated text. F-score is the harmonic average of the precision and recall. Further, a corpus level accuracy of the style using the same algorithm as used for creating the corpus was measured.

First, it was checked if a seq2seq model with attention is able to learn properly just based on the small corpora. As shown in Table 1, although MLE (Maximum Likelihood Estimation) was applied only on a fragment corpus, it is able to learn the style but suffer badly in terms of generating correct text, see recall and f-score in row 1 of Table 1.

Table 1

|  | Rouge-1 Recall/ f-score | Rouge-2 Recall/ f-score | Rouge-L Recall / f-score | Accuracy |
|---|---|---|---|---|
| MLE fragment | 08.24/08.23 | 01.05/01.06 | 07.40/07.39 | 71.46 |
| MLE teaser + MLE-fragment | 14.41/14.31 | 03.35/03.35 | 12.64/12.54 | 52.08 |
| MLE teaser + RL-fragment | 17.66/15.61 | 04.71/04.17 | 15.41/13.58 | 65.62 |

However, the adaptation of a seq2seq model trained on a teaser (MLE teaser) by using only a MLE training (teacher forcing) improves the recall and the f-score (row 2) but cannot learn the style sufficiently. However, adapting the pre-trained seq2seq model (MLE teaser) by using a policy-gradient training (Reinforcement Learning, RL-fragment) according to the present invention performs much better than the adaptation of the weights by using MLE teacher-forcing.

Table 1 shows the results of comparing the use of the MLE training only on a fragment-based corpus and two sets of adaptation experiments: an adaptation using the MLE training and an adaptation using the self-critical algorithm REINFORCE. As shown, an adaptation using the self-critical policy gradient largely improves the recall and the f-score.

Besides the fragment-based corpus, similar experiments were performed with the quote-based corpus. For this case, the corpus level accuracy, i.e., the model capacity to generate quotes, is almost 100% for all experiments. However, a new form of accuracy, i.e., loose accuracy, was created that measures the intersection of a generated quote substring with a ground-truth quote substring. The intersection needs not to be a complete but rather loose match. As illustrated in Table 2, the MLE training only on the quote-corpus performs the worst result in comparison with the two other forms of adaptation. Between the adaptations, a policy-gradient based training performs much better than a teacher-forcing MLE adaptation.

Therefore, an adaptation of a seq2seq model is advantageous as in several occasion not enough training data are available to train a complex seq2seq model. The comparison between an adaptation using an MLE training method and an adaptation using a self-critical policy gradient shows that the policy gradient is more successful in both adapting the style of a text and in generating a better quality of text. The reason for the success of a self-critical policy-gradient is due to its global view on the generation of a result achieved through multiple rollouts and advantage-based guiding of the policy-gradient generator.

Table 2

| | Rouge-1 Recall/ f-score | Rouge-2 Recall/ f-score | Rouge-L Recall / f-score | Accuracy |
|---|---|---|---|---|
| MLE quote | 06.44/07.24 | 00.71/00.78 | 07.40/07.39 | 22.29 |
| MLE teaser + MLE-quote | 15.57/16.52 | 04.28/04.54 | 12.64/12.54 | 32.19 |
| MLE teaser + RL-quote | 21.53/20.77 | 07.12/06.85 | 18.74/18.02 | 38.33 |

Table 2 shows the results of comparing the use of a MLE training only on a quote-based corpus to two sets of adaptation experiments: an adaptation using the MLE training and an adaptation using a self-critical REINFORCE algorithm. As shown, the adaptation using a self-critical policy gradient largely improves recalls, f-scores and accuracy.

An adaptation of the pre-trained seq2seq model trained by an MLE-teaser (MLE-teaser) using a policy-gradient training (RL-fragment) performs much better than an adaptation using a teacher-forcing training. However, the adaptation of a seq2seq model trained on a teaser (MLE-teaser) by using only a MLE training (teacher-forcing) also improves recall and f-score (row 2 of the table above), but cannot learn the style sufficiently.

Therefore, according to the present invention, a policy gradient generator 320 is used for adapting a pre-trained seq2seq model 10 to generate a specific type of a teasing text. This addresses both above described challenges, i.e., a requirement of enormous labelled data and a greater exploration of vocabulary. A reward 340 obtained from the previous state rather than a greedy search value for the state as the baseline for the reward is used.

In Fig. 4 the processing steps of the method according to the present invention are illustrated. In step S200, the style of the upcoming teaser text by using an algorithm for compiling style-oriented corpora is fixed. In step S210, the seq2seq abstractive summarizing model 10 for generating each of those style-oriented teasers is pre-trained. In step S230, the weights (attention vector) w1, w2, ... wN of the pre-trained seq2seq (abstractive summarizing) model 10 are adapted.

Fig. 5 schematically illustrates a non-transitory computer-readable data storage medium 500 comprising executable program code 550 configured to, when executed, perform the method according to the second aspect of the present invention.

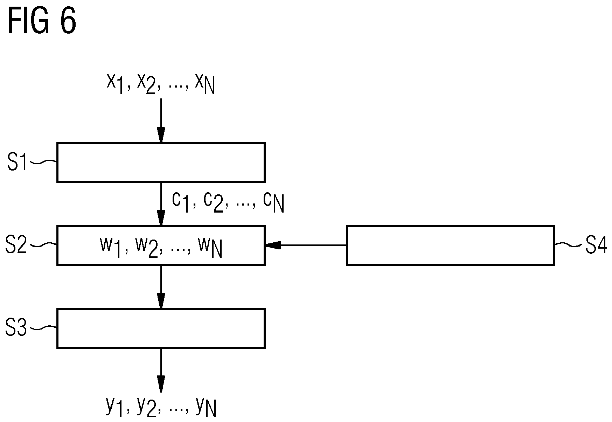

Fig. 6 provides a schematic flow diagram illustrating a computer-implemented method for processing natural language according to an embodiment of the second aspect of the invention. The method processes natural language by receiving an input sequence of input tokens x1, x2, ... xN representing a first sequence of words in a natural language of a first text and generating an output sequence of output tokens y1, y2, ... yN representing a second sequence of words of a second text. A step S1 refers to encoding each input token x1, x2, ... xN in the input sequence into a respective encoded representation c1, c2, ... cN of each input token x1, x2, ... xN by an encoder 30 (see Fig. 1) of at least one sequence-to-sequence (seq2seq) model 10 (see Figs. 1 and 3) comprising a forward recurrent neural network (RNN) and a backward RNN. A step S2 refers to applying weights w1, w2, ... wN to the encoded representations c1, c2, ... cN by an attention module 20 (see Figs. 1 and 3) of the at least one seq2seq model 10. A step S3 refers to decoding the weighted encoded representations c1, c2, ... cN into the output tokens y1, y2, ..., yN of the output sequence by a decoder 40 (see Fig. 1) of the at least one seq2seq model 10 comprising a forward RNN and a backward RNN. A step S4 refers to training the weights w1, w2, ... wN for adaption to one corpus for each seq2seq model 10 by a policy gradient generator 320 (see Fig. 3).

In industrial settings there is often a lack of sufficiently labelled data. The present invention shows that adaptation of weights (attention vector) is one possibility to improve the data quality and can be applied in computer vision tasks, natural language processing (NLP), continuous sensor values, and for other applications.

**Claims**

1.  A natural language processing system (1) configured for receiving an input sequence of input tokens (x1, x2, ... xN) representing a first sequence of words in a natural language of a first text and generating an output sequence of output tokens (y1, y2, ..., yN) representing a second sequence of words in a natural language of a second text and having at least one sequence-to-sequence, seq2seq, model (10) comprising:

    an encoder (30) comprising a forward recurrent neural network RNN and a backward RNN configured for encoding each input token (x1, x2, ... xN) in the input sequence into a respective encoded representation (c1, c2, ... cN) of each input token (x1, x2, ... xN) ;
    an attention module (20) configured for applying weights (w1, w2, ... wN) to the encoded representations (c1, c2, ... cN); and
    a decoder (40) comprising a forward RNN and a backward RNN configured for decoding the weighted encoded representations (c1, c2, ... cN) into the output tokens (y1, y2, ..., yN) of the output sequence;
    the natural language processing system (1) further having a policy gradient generator (320) configured for training the weights (w1, w2, ... wN) for adaption to one corpus for each seq2seq model (10).

2.  The natural language processing system (1) of claim 1, wherein the policy gradient generator (320) is a self-critical policy generator.

3.  The natural language processing system (1) of claim 1 or 2, wherein the policy gradient generator (320) is configured for training the weights (w1, w2, ... wN) by means of a REINFORCE algorithm.

4.  The natural language processing system (1) of any one of claims 1 to 3, wherein the policy gradient generator (320) is given by the equation:

$$\nabla_\theta E[R] = E_{\hat{x}_t \sim G} \left[ \sum_{t=1}^{T} (R_t - b_t) \ \nabla_\theta \log( G_\theta(\hat{x}_t)) \right]$$

    where x represents the output token (y1, y2, ...yN), R represents a cumulative reward (340) and b represents a baseline, respectively for a state S of a sequence of length T.

5.  The natural language processing system (1) of any one of claims 1 to 4, wherein a recall-oriented-understudy-for-gisting-evaluation-,ROUGE-, recall is used as a reward (340) in training the weights (w1, w2, ... wN) by the policy gradient generator (320) .

6.  The natural language processing system (300) of any one of claims 1 to 5, wherein the second text is a ShortText comprising one of several linguistic styles and the policy gradient generator (320) is configured for adaption to the one of several linguistic styles based on the corpus for the respective seq2seq model (10).

7.  The natural language processing system (1) of any one of claims 1 to 5, wherein the second text is a teaser comprising one of several linguistic styles and the policy gradient generator (320) is configured for adaption to the one of the several linguistic styles based on the corpus for the respective seq2seq model (10).

8.  The natural language processing system (1) of claim 7, wherein the teaser is a fragment-based teaser or a quote-based teaser.

9.  The natural language processing system (1) of any of claims 1 to 8, wherein the policy gradient generator (320) is configured for utilising an algorithm for generating the corpus of a dataset comprising examples of a linguistic style of the second text and using the respective corpus having the recognised linguistic style for training the weights (w1, w2, ... wN).

10. A computer-implemented method for processing natural language, by receiving an input sequence of input tokens (x1, x2, ... xN) representing a first sequence of words in a natural language of a first text and generating an output sequence of output tokens (y1, y2, ... yN) representing a second sequence of words of a second text, comprising the steps:

encoding (S1) each input token (x1, x2, ... xN) in the input sequence into a respective encoded representation (c1, c2, ... cN) of each input token (x1, x2, ... xN) by an encoder (30) of at least one sequence-to-sequence, seq2seq, model (10) comprising a forward recurrent neural network, RNN, and a backward RNN;
applying (S2) weights (w1, w2, ... wN) to the encoded representations (c1, c2, ... cN) by an attention module (20) of the at least one seq2seq model (10);
decoding (S3) the weighted encoded representations (c1, c2, ... cN) into the output tokens (y1, y2, ..., yN) of the output sequence by a decoder (40) of the at least one seq2seq model (10) comprising a forward RNN and a backward RNN; and training (S4) the weights (w1, w2, ... wN) for adaption to one corpus for each seq2seq model (10) by a policy gradient generator (320) .

11. The method of claim 10, wherein training (S4) the weights (w1, w2, ... wN) is implemented by means of a REINFORCE algorithm.

12. The method of claim 10 or 11, further comprising using a recall-oriented understudy-for-gisting-evaluation-,ROUGE-, recall as a reward (340) in training (S4) the weights (w1, w2, ... wN) .

13. The method of any one of claims 10 to 12, further comprising utilising an algorithm for generating the corpus of a dataset comprising examples of a linguistic style of the second text and using the respective corpus having the recognised linguistic style for training the weights (w1, w2, ... wN) by the policy gradient generator (320).

14. A non-transitory computer-readable data storage medium (500) comprising executable program code (550) configured to, when executed, perform the method according to any one of claims 1 to 13.

FIG 1

FIG 2

## FIG 3

## FIG 4

## FIG 5

# FIG 6

$$x_1, x_2, ..., x_N$$

S1

$$c_1, c_2, ..., c_N$$

S2 | $w_1, w_2, ..., w_N$ | ← | | S4

S3

$$y_1, y_2, ..., y_N$$

Europäisches
Patentamt

European
Patent Office

Office européen
des brevets

# EUROPEAN SEARCH REPORT

Application Number

EP 18 19 2464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TAL BAUMEL ET AL: "Query Focused Abstractive Summarization: Incorporating Query Relevance, Multi-Document Coverage, and Summary Length Constraints into seq2seq Models", ARXIV.ORG, CORNELL UNIVERSITY LIBRARY, 201 OLIN LIBRARY CORNELL UNIVERSITY ITHACA, NY 14853, 23 January 2018 (2018-01-23), XP080854155, * page 2, left-hand column, last paragraph - right-hand column, paragraph 1 * * section 2.2 * * figure 3 * | 1-14 | INV. G06F16/34 G06F17/27 |
| Y,D | STEVEN J RENNIE ET AL: "Self-critical Sequence Training for Image Captioning", ARXIV.ORG, CORNELL UNIVERSITY LIBRARY, 201 OLIN LIBRARY CORNELL UNIVERSITY ITHACA, NY 14853, 2 December 2016 (2016-12-02), XP080736250, DOI: 10.1109/CVPR.2017.131 * page 1, right-hand column, last paragraph - page 2, left-hand column, last paragraph * * section 3 * | 1-14 | |
| A | ZHANG YONG ET AL: "A Hierarchical Attention Seq2seq Model with CopyNet for Text Summarization", 2018 INTERNATIONAL CONFERENCE ON ROBOTS & INTELLIGENT SYSTEM (ICRIS), IEEE, 26 May 2018 (2018-05-26), pages 316-320, XP033374824, DOI: 10.1109/ICRIS.2018.00086 [retrieved on 2018-07-11] * abstract * * section III * | 1-14 | TECHNICAL FIELDS SEARCHED (IPC) G06F |

-/--

The present search report has been drawn up for all claims

| Place of search | Date of completion of the search | Examiner |
|---|---|---|
| Berlin | 6 March 2019 | Abram, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

**EUROPEAN SEARCH REPORT**

Application Number

EP 18 19 2464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BENJAMIN ROTH ET AL: "Neural Architectures for Open-Type Relation Argument Extraction", ARXIV.ORG, CORNELL UNIVERSITY LIBRARY, 201 OLIN LIBRARY CORNELL UNIVERSITY ITHACA, NY 14853, 5 March 2018 (2018-03-05), XP080857894, * section 2.2.1 * | 1-14 | |
| A | ANUROOP SRIRAM ET AL: "Cold Fusion: Training Seq2Seq Models Together with Language Models", ARXIV.ORG, CORNELL UNIVERSITY LIBRARY, 201 OLIN LIBRARY CORNELL UNIVERSITY ITHACA, NY 14853, 21 August 2017 (2017-08-21), XP080953929, * the whole document * | 1-14 | |

TECHNICAL FIELDS
SEARCHED      (IPC)

The present search report has been drawn up for all claims

| Place of search | Date of completion of the search | Examiner |
|---|---|---|
| Berlin | 6 March 2019 | Abram, Robert |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Abstractive text summarization using sequence-to-sequence runs and beyond. **RAMESH NALLAPATI ; BOWEN ZHOU ; CICERO NOGUEIRA DOS SANTOS ; CAGLAR GÜLCEHRE ; BING XIANG.** Proceedings of the 20th SIGNLL Conference on Computational Natural Language Learning, CoNLL 2016. ACL, 11 August 2016, 280-290
- Rush. 2016. Abstractive sentence summarization with attentive recurrent neural networks. **SUMIT CHOPRA ; MICHAEL AULI ; ALEXANDER M.** NAACL HLT 2016, The 2016 Conference of the North American Chapter of the Association for Computational Linguistics: Human Language Technologies. The Association for Computational Linguistics, 12 June 2016, 93-98
- Abstractive sentence summarization with attentive recurrent neural networks. **SUMIT CHOPRA ; MICHAEL AULI ; ALEXANDER M. RUSH.** NAACL HLT 2016, The 2016 Conference of the North American Chapter of the Association for Computational Linguistics: Human Language Technologies. The Association for Computational Linguistics, 12 June 2016, 93-98
- **STEVEN J RENNIE ; ETIENNE MARCHERET et al.** Self-critical sequence training for image captioning. *CVPR,* 2017
- **ROMAIN PAULUS ; CAIMING XIONG ; RICHARD SOCHER.** A deep reinforced model for abstractive summarization. *International Conference on Learning Representations,* 2018
- **LLORET ; PALOMAR.** *Elena Lloret and Manuel Palomar,* 2013
- Towards automatic tweet generation: A comparative study from the text summarization perspective in the journalism genre. *Expert Syst. Appl.,* vol. 40 (16), 6624-6630
- **PRIYA SIDHAYE ; JACKIE CHI KIT CHEUNG.** Indicative tweet generation: An extractive summarization problem. *Proceedings of the 2015 Conference on Empirical Methods in Natural Language Processing,* 2015, 138-147